# EUROPEAN PATENT SPECIFICATION

(11) **EP 3 058 260 B1**
(45) Date of publication and mention of the grant of the patent: **06.12.2017**
(21) Application number: 14786206.4
(22) Date of filing: 20.10.2014
(51) Int. Cl.: F16L 5/04, A62C 2/06

(54) **A PIPE TRANSIT SYSTEM FOR PLASTIC PIPES**
ROHRTRANSITSYSTEM FÜR KUNSTSTOFFROHRE
SYSTÈME DE TRANSPORT DE TUYAUX POUR DES TUYAUX EN PLASTIQUE

(30) Priority: 18.10.2013 NL 1040462
(43) Date of publication of application: 24.08.2016
(73) Proprietor: Beele Engineering B.V., 7122 NZ Aalten (NL)
(72) Inventor: BEELE, Johannes Alfred, NL-7122 NZ Aalten (NL)
(74) Representative: Hoffmann Eitle
(86) International application number: PCT/EP2014/072413
(87) International publication number: WO 2015/055854

(56) References cited:
- WO-A1-01/09538
- WO-A1-2008/023058
- WO-A1-2008/104237
- WO-A1-2009/000778
- WO-A1-2009/090247

## Description

### Introduction

The invention is related to a thermally expandable "fire-stop" system for placement in a rigid and preferably thermally stable conduit having an inner wall defining an inner space through which a single pipe or a bundle of pipes extends, or will extend. Such a conduit is often of metal, particularly in off-shore constructions and vessels. However, in on-shore constructions it may also be of an on-shore building material, such as concrete. It is not even fully inconceivable that such a conduit is of a hard plastic which does not soften upon exposure to heat. Each pipe is a, relatively, thermally weakenable pipe. The pipe is usually of plastic and/or may comprise fiber material.

### Background of the invention

Conduits are normally incorporated in a construction element that divides, for instance, two compartments. Such a construction element may also be referred to as a partition. A pipe may extend through the conduit from one of the two compartments into the other. These conduits are often referred to as pipe penetrations or transit systems. Such a conduit is often present in constructions formed on the basis of civil engineering. Factories, buildings, drainage systems, tunnels, subways, etc. all comprise such penetrations. However, as indicated above, also constructions formed on the basis of nautical engineering do comprise such conduits. One finds them on board of vessels and/on other offshore applications such as oil rigs.

These penetrations are seen as unwelcome necessities in such a construction. Pipes for, for instance, water distribution and water wastage systems, air-conditioning systems, hydraulic and pneumatic control, sprinklers etc but also for transport of gas, or oil, need to be extending throughout such a construction, even though this entails introducing weak spots in a separation of the compartments.

Such weak spots do not manifest themselves to a great extent in the mechanical strength of the construction but much more in the possibility of undesired transport of physical phenomena throughout the structure.

An example of such phenomena is a fire which needs to be confined, as long as possible, to only one area. This is important not only to allow for control and extinguishing the fire, but also to provide time for people present in compartments near to the fire for reaching a safe distance from the fire before it further expands. Spreading of the fire is ideally fully blocked, or measures are in place to ensure that it can only spread in a very slow fashion. To prevent smoke and/or fire from passing through the conduit from one compartment to another, the conduit is usually provided with a material that closes the conduit, at least for some time, when the conduit is exposed to heat due to a nearby fire.

Another form of transport that needs to be prevented is the supply of air to a fire which takes place in a compartment. Particularly for on-shore constructions, it is believed that fire is fed with oxygen as supplied through burned-out conduits and that it spreads itself rapidly throughout a multi-storey building when transport of air can freely occur between different levels of compartments. It is also for this reason desirable that a conduit is automatically closed off, when on one side of the conduit a fire takes place.

Although above reference is made to a construction element having a conduit and dividing two compartments, it is also possible that a construction element separates a compartment from the surrounding environment. It is thus possible that one side of the construction element is exposed to atmospheric conditions.

It will be appreciated that a pipe extending through a conduit, the conduit itself and the construction element into which the conduit is incorporated, may each be made of a material that allows for the conduction of heat. The efficiency for conducting heat depends on the type of material and the dimensions of that material. In principle, heat can in such a situation be supplied to the inner space of the conduit via at least two different routes. The first route is via the pipe extending through the conduit and the second route to the inner space of the conduit is via the material out of which the conduit itself is made. As in offshore constructions and vessels, partitions and conduits are usually made of metal, i.e. a good heat-conducting material, heat is usually rapidly supplied to the inner space of the conduit via the second route. Of course, heat may also predominately or exclusively be applied to the inner space of the conduit via the first route, in a situation where the partition is for instance a concrete wall and the conduit is formed by a through-hole in that wall.

There is a strong tendency in both the offshore and the on-shore construction industry to make pipes, in particular pipes of so-called service systems as referred to above, of a plastic material such as for instance PVC, PP-R, ABS and HDPE. Relative to aluminium or metal pipes, such plastic pipes offer an enormous reduction in weight, clearly advantageous in shipbuilding. As known, plastics are not susceptible and do not contribute to corrosion, advantageous in both the offshore and on-shore construction industry. Such plastic pipes are observed to suffer much less from sedimentation in the pipes, particularly when compared to steel pipes, giving plastic pipes advantages in waste water installations. On exposure to heat, however, such plastic pipes may weaken, i.e. become soft, and are therefore further in this specification referred to, as made of a thermally weakenable or a thermally softenable material, or in short as thermally weakenable pipes. The phrase thermally weakenable material refers thus in general to materials comprising or consisting of plastic. However, it is envisagable that also pipes made of or made with fibreglass form thermally weakenable material and these are therefore equally embraced by the term thermally weakenable pipes.

It will be clear that such weakening of the pipe will occur more rapidly in a conduit which is made of metal and incorporated in a metal construction element or partition. The conduit will then act as a kind of oven surrounding the pipe of the weakenable material, leading to local collapse of the pipe. However, a heated inner wall of a through-hole in a stone or concrete wall which is exposed to a fire, may equally act like an oven, even though the heating-rate will in that case be different than the heating-rate for "the metal oven". A stone or concrete wall will absorb much more heat and is a poor conductor of heat. The second route for the supply of heat into the conduit is in that case therefore much less effective. In such a situation it may well be that the first route, i.e. transport of heat into the conduit via the pipe itself, is by far the most dominant route if not effectively the only one, even though the pipe may be of plastic.

It is common practice to seal the space between a conduit and a pipe as extending through the conduit, with a sealing system. Such a sealing system may provide sealing capacities before exposure to heat, and may for instance seal such that gas and/or water cannot penetrate through the annular space between the pipe and the conduit.

In particular for conduits through which a single pipe of a thermally weakenable material extends, advanced sealing systems have been developed. Reference is made to EP 120 075.9 B1 of the same inventor, describing so-called "crusher plugs". At each end of the conduit is a plug inserted in the annular space between the conduit and the pipe extending to the conduit. The crusher plug is made of a thermally expandable material. Upon exposure to heat, the crusher plug expands. However, as the conduit is of a relatively rigid material, expansion in radial direction is only possible radially inwards. As upon the exposure to heat the thermally weakenable pipe has started weakening, the radial inward expansion of the plug crushes the pipe further and therewith closes the pipe off, as well as the complete conduit. The use of such plugs is very advantageous for conduits through which a single pipe extends, as the annular space which needs to be shut off by the plug is very well defined.

WO 2006/097290, also of the present inventor, discloses a conduit through which a plurality of pipes extends. For sealing that conduit a system is described that comprises a multitude of heat expandable rubbery sleeves. The sleeve material is made heat expandable by incorporation of heat expandable graphite into the rubbery material. Such a sleeve is also referred to as a filler sleeve. Usually, the sleeve is easily bendable, soft, and has relatively poor mechanical properties. This makes the sleeves perfect for inserting in a conduit and therewith filling the conduit. The sleeves are applied in a fashion parallel to each other and parallel to the pipe. The system further comprises a fire-resistant and/or watertight sealant. The sealant is applied against the ends of the sleeves and forms a sealing layer that seals off the conduit.

A system as described in WO 2006/097290 is usually applied in a conduit which is very large in cross-section relative to the cross-section of the pipe extending through the conduit. The main reason for this is that there has to be enough space in the conduit for filling the conduit with the heat expandable rubber sleeves, so that these heat expandable sleeves are during expansion in radial (transverse) direction capable of closing the conduit fully off. As there is space between the filler sleeves as well as in each empty sleeve, thermal expansion can freely occur in the radial (transverse) direction as soon as the temperature in the conduit reaches a point from where the thermally expandable rubber material will expand.

Although there is in axial (longitudinal) direction per unit of length between the sealant layers, no space for expansion available, and the expansion is expected to be larger in axial direction than in radial direction given the amount of heat expandable material that is axially aligned, the expansion of the filler sleeves is initially still predominantly radially oriented.

Without wishing to be bound by any theory this is thought to be a result of three factors. Firstly, as soon as thermal expansion occurs, even though at low temperatures and therefore still only to a limited extent, the axially expanding sleeves feel constrained between the sealant layers and start buckling, therewith removing pressure on the inner wall of the sealant layers. Secondly, the expansion will find its way radially given the little resistance the expansion experiences on radially expanding. (Remember, space is available radially, not only due to the space in and between the sleeves, but at higher temperatures also due to the weakening pipe within the conduit). Thirdly, air originally trapped in the conduit and reaching a high pressure due to the raised temperature and volume reduction in the conduit, will at some stage find its way out presumably through small cracks which have become available in the sealant layer without a breaking up of the sealant layer. This escaping of air offers "new volume" made available in the conduit, into which the expanding sleeve layers can expand, whilst staying within the confinement of the conduit and the sealant layers. At some stage, the expanding forces in the conduit as restrained by the sealant layers become so high that the sealant layer breaks. This breaking is then in itself not a problem as the expanded sleeves have sealed off the conduit before the sealant layer breaks.

Currently there is a strong desire to have smaller and shorter conduits, in order to save both weight and space, without compromising sealing capacity both before and during exposure to a fire.

Conduits which are smaller in cross-sectional dimensions do have little capacity for letting the onset of expansion of the filler sleeve material to predominantly take place in radial direction. In such conduits, it is the radial expansion which is constrained. Hence, the expansion will at a much earlier stage attempt to find its way axially, resulting in early breaking of the sealant layer, with a possibility that the sealant layer breaks before the conduit has been fully closed off by the expanding material. In such a situation it is needed to apply instead of a sealant layer a much stronger "structure". In response thereto one applies in practice a plug designed to sustain high pressures rather than a sealant layer. It turns out that a conduit with expandable filler sleeves in the annular gap between the conduit and the pipe extending therethrough, on both ends of the conduit closed off by a deeply inserted plug, effectively allows the filler sleeves to expand radially and close the conduit and pipe fully off.

However, the drive for further reduction of the cross-sectioned area of the conduit relative to the pipe, continues in attempts to save even more space and even more weight.

EP 2203671 describes a thermally expandable fire stop system for placement in a rigid and thermally stable conduit having an inner wall defining an inner space through which a single pipe or a single bundle of pipes extends, or will extend. Each pipe is a, relatively, thermally weakenable pipe. In a (inner) space of the conduit it is provided with a system comprising at least a thermally expandable device which includes at least one component having a non-linear thermal expansion characteristic. The device has surfaces which start melting at a temperature under a lowest end of a temperature range in which the device displays its non-linear expansion characteristic. The surfaces then form a sticky material. The device is made of a rubberlike compound that has been extruded into a predetermined shape. The device is positioned concentrically relative to the inner space for concentrically surrounding the pipe or a single bundle of pipes, and such that before onset of the non-linear thermal expansion of the device, hot gas can from outside the conduit enter a gas entrance space between the device and the inner wall of the conduit, between the outer wall of the pipe or outer walls of the single bundle of pipes and the device, or through the device. The sticky material can subsequently be formed at the surfaces of the device. The device can then firmly fix itself within the conduit, so that expansion in axial direction is inhibited and expansion in radial direction is more facilitated.

Although this device and system function very well, according to a new interpretation of SOLAS Regulation 13, the sealing systems also have to be watertight, not only before but also after exposure to fire. When the thermally expandable device has expanded predominantly radially and crushed the pipe when it became weak due to exposure to the heat, the resulting structure is cooled by water. During and after cooling the conduit should be watertight. This new interpretation of Regulations for the watertight bulkheads in passenger ships is by some certifying bodies fine-tuned into the requirement that the watertight penetrations need to be tested for a period of at least 30 minutes under a hydraulic pressure equal to or greater than that corresponding to the actual location in the vessel in which they are to be installed.

WO 2008/140399 A1 discloses a seal formed of two halves and capable of forming an annular seal having at least one central opening for a pipe or tube when the seal halves are brought together. Between two of such axially aligned seals a layer of intumescent material is placed.

Each seal half has the form of two base parts. The layer of intumescent material has a relatively short axial extension compared to the axial extension of the base parts. Furthermore, the layer of intumescent material is fixed to the respective base part by means of a mechanical positioning via studs in-between the base parts. At the end of the front base part and the rear base part, a front fitting and a rear fitting are arranged, respectively. The form of the studs corresponds with the form of the front and rear fittings. Thus, each stud has the form of half a ring. The fittings are held at the base parts by means of screws. Openings are arranged in the fittings, the base parts, the studs, and the intumescent material to receive the screws. The screws are threaded at their outer ends to cooperate with threaded openings of the rear fitting. The function of the screws cooperating with the fittings is to compress the base part in an axial direction, with maintained accommodation for the uncompressed intumescent material via the mechanical studs in-between the base parts. Thus, the intumescent material will not be compressed as the studs mechanically separate the base parts during compression.

Normally, the intumescent material and the studs have a somewhat smaller outer diameter than the rest of the seal. A gap is also formed on the inside of the intumescent material. Thus the intumescent material is in radial direction thermally insulated as there is no contact with the outer wall of the pipe or tube and there is no contact with the inner wall of the conduit. As a consequence, the intumescent material may be warmed up too late and will only start expanding a relatively long time after the plastic pipe or tube has weakened and collapsed. Such weakening and collapsing will of course to a much greater extent already take place at the side of the sealing which is exposed to the fire. Such collapsing may occur over a relatively large axial length of the pipe or tube so that also the sealing of the side unexposed to the fire may no longer do its sealing job, given the smaller diameter of the pipe or tube. In summary, this system has a lot of problems which negatively influence the likelihood that after a fire the sealing system will still be watertight.

The main problem of this system though is that it has at the time on installation no flexibility in responding to a different plastic pipe, for instance a pipe which starts softening at a relatively low temperature. In such a case, the system should be optimized for a fast response. However, the use of the system, in terms of dimensions of the respective parts is for the axial direction fixed. Also, the type of intumescent material is fixed, and cannot be replaced. Finally, the air gaps concentrically inside and around the intumescent material are "fixed". Due to these problems, response of the system to exposure to heat is far from optimal and the watertightness after a fire is therefore questionable.

On the market are also systems comprising two seals as described above but fully separate from each other and each tightenable, independently of each other. Each of these tightenable seals is put in one end of the conduit, so that each end of the conduit is provided with such a tightenable seal. The seals are relatively short. The arrangement is referred to as a "back-to-back arrangement". An intumescent material is placed so that it will be in-between the seals filling in axial direction a small proportion of the axial length of the cavity formed between the ends of the seals. The intumescent material will be able to expand in an axial direction without any crushing of the pipe or tube. As a consequence of this, also in this arrangement, the pipe or tube may already have weakened or even collapsed before the intumescent material is capable of closing off the conduit. Thus, also in this arrangement, watertightness after a fire may not be available for a high water pressure.

Apart from the drawbacks mentioned above, the tightenable systems have in general the problem that upon exposure to heat, the parts for tightening may expand up to a point that the sealing integrity is no longer available. Furthermore, in the long run, the systems suffer from problems which are also well known from rubber washers in taps. When a tap is closed too tightly, the rubber washer will be damaged and due to stress relaxation it will axially permanently deform. Then only a further tightening could again secure the sealing integrity. However, this sealing integrity will immediately deteriorate, again due to stress relaxation. Under circumstances, watertightness is then not even available before a fire takes place.

It is an object of the invention to provide a pipe transit system for plastic pipes in a way that both before and after exposure to fire, watertightness is maintained against relatively high water pressures, and for a relatively long time.

### Summary of the invention

The invention provides a pipe transit system for plastic pipes as defined in claim 1. The flexibility needed for obtaining a "tailor-made" pipe penetration with watertightness before and after exposure to a fire is available. All the parts are and remain unconnected so that exchanging for another part is possible throughout the lifetime of the system and in any case just before installation. The sealings can be optimal for watertightness before a fire occurs. The thermally expandable sleeve can be chosen to be optimal for the type of plastic pipe, not only its diameter. If an early response upon heating is required, then it will be possible to use a thermally expandable sleeve that starts expanding at relatively low temperatures. The axial length of the sleeve can be such that it fully occupies the gap between the sealings, so that expansion will predominantly occur in radial direction, as desired. Given this optional response, the expansion will occur to the extent that the conduit is between the sealings also watertight after exposure to fire, at least for minimum pressures and times as now required by a few certificate issuing organizations.

In an embodiment, the longest distance between sealings, measured between ends furthest apart from each other, corresponds to the sum of the axial lengths of the at least two sealings and the axial lengths of the at least one rubberlike thermally expandable sleeve. This has the advantage that no significant axially extending air gap is present within the conduit, so that the rubberlike thermally expandable sleeve is in axial direction not thermally insulated via any air gap. There is then also no possibility of a pressure build-up by the air once heated up due to a nearby fire. Thus there is also no possibility that such pressurized air can push the sealings out of the conduit. The expansion of the rubber sleeve can optimally follow the path of the weakest resistance which is formed by the weakening plastic pipe once exposed to heat of a nearby fire.

In an embodiment, the sum of the axial lengths of the at least two sealings and the axial length of the at least one rubberlike thermally expandable sleeve corresponds to the axial length of the conduit. This means that the conduit can be as short as needed for the performance of the system when exposed to fire and for reassuring that the system is watertight after fire at a prescribed water pressure.

The invention and embodiments thereof are further explained with the aid of a drawing in which:
Fig. 1 shows schematically in a cross-sectional view a first embodiment of a system in accordance with the invention;
Fig. 2 shows schematically in a cross-sectional view a second embodiment of a system in accordance with the invention;
Fig. 3 shows schematically in a cross-sectional view a third embodiment of a system in accordance with the invention;
Fig. 4 shows schematically in a cross-sectional view a fourth embodiment of a system in accordance with the invention; and
Fig. 5 shows schematically a set-up for testing before and after exposure to a fire the watertightness of embodiments of a system according to the invention.

### Description of the figures

In the drawing, like parts have like references.

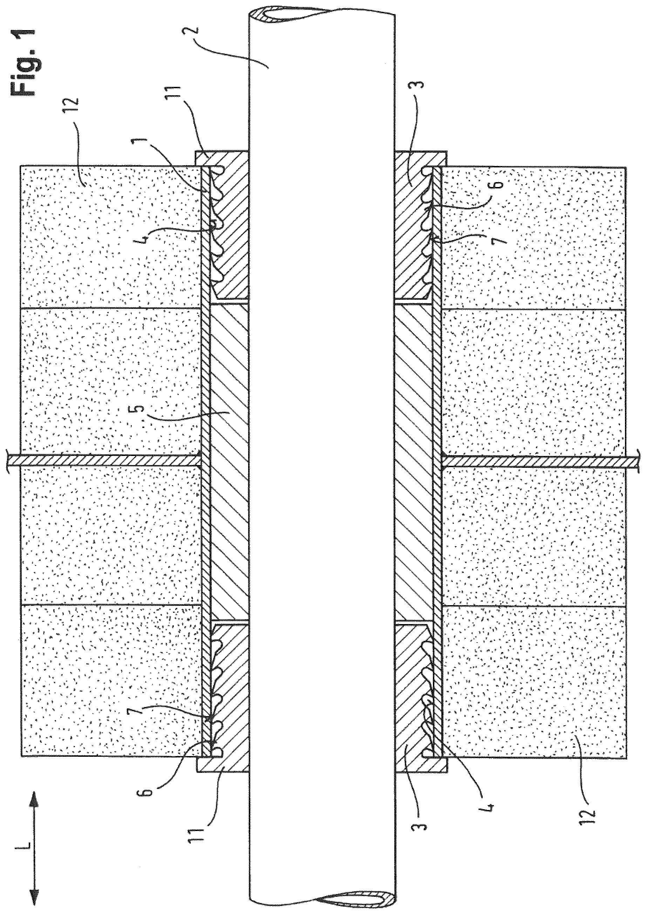

Fig. 1 shows a first embodiment of a pipe transit system according to the invention. The system is suitable for transits through which plastic pipes extend. The system comprises a conduit 1 having an axial direction (L) and a thermally softenable pipe 2 extending therethrough. The system further comprises two sealings 3. Each sealing 3 has an axial length. Each sealing 3 is sealingly positioned between an inner wall 4 of the conduit 1 and the pipe 2. The system further comprises a rubberlike thermally expandable sleeve 5, surrounding the pipe 2 and also having an axial length. The rubberlike thermally expandable sleeve 5 is situated between the sealings 3. Each of the sleeve 5 and the sealings 3 is an unconnected separate entity, even though also being adjacent one of the sealings 3 or the sleeve 5. Fig. 1 further indicates that, preferably, the longest distance between sealings, measured between ends furthest apart from each other, corresponds to the sum of the axial length of the two sealings and the axial length of the rubberlike thermally expandable sleeve situated between the two sealings 3. The drawing shows a minute gap, to show that the sleeve end 5 and the sealings 3 are indeed separate entities and unconnected. Also in reality there may be a minute gap, at most of 1 cm in axial direction. In general, air gaps are to be avoided as the air trapped in these gaps will under exposure to heat generate a high pressure and may contribute to a pushing out of the sealings 3.

As also derivable from Fig. 1, the sum of the axial lengths of the two sealings 3 and the axial length of the rubberlike thermally expandable sleeve 5 corresponds to the axial length of the conduit 1. Thus, ideally, in axial direction, the conduit is fully occupied by sleeve material and sealing material.

Generally, the rubberlike thermally expandable sleeve 5 comprises material having a component which causes the material upon exposure to heat to expand rapidly to an extent which is more than the extent to which that material not having this component would expand. Such a component may be expandable graphite and/or intercalated graphite or an equivalent thereof. The component is preferably such that it causes expansion of the material at the softening temperature of LDPE and/or HDPE. Softening temperatures of LDPE and/or HDPE are amongst the lowest of the softening temperatures of plastics as used for pipes. Thus, a component causing the expansion to occur at such a softening temperature would ensure that the thermally expandable sleeve will start expanding for each and every plastic pipe used in the field, before the pipe has collapsed due to its weakening.

The conduit 1 may be of a corrosion-resistant metal, or of a hard engineering plastic which is not thermally softenable. The system may be symmetrical in that an imaginary transverse cross-sectional plane of the conduit may form a mirror plane. This is shown in Fig. 1, where the partition P coincides with the mirror plane. The system may further be free from metal parts for tightening and controlling the sealing. At least one of the sealings 3 may comprise a vulcanized fire-resistant rubber plug.

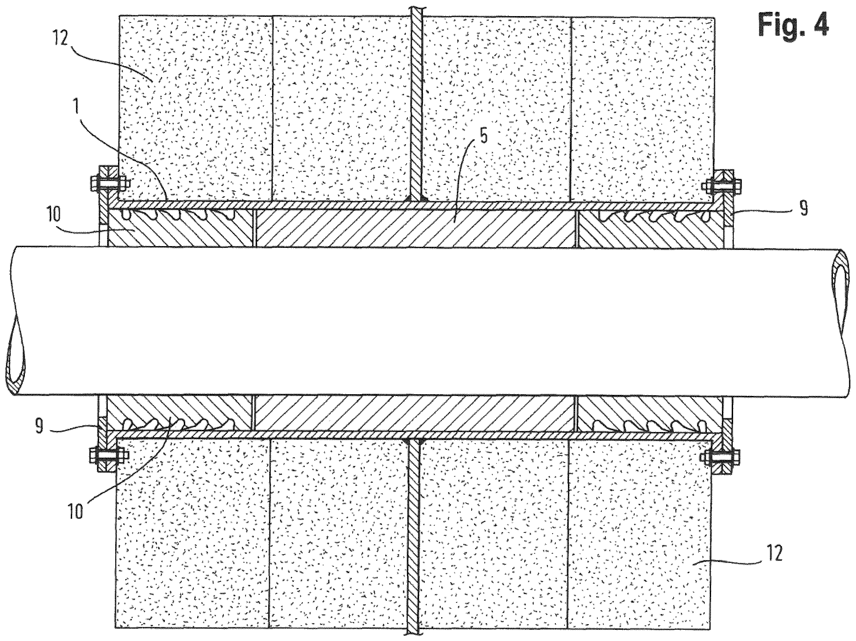

As shown in Fig. 1, the sealings 3 may be provided with outer ribs 6 having outer tops spaced apart in a longitudinal (axial) direction (L) for realizing, in use, annular contact surfaces 7 which are closed in itself in a circumferential direction between the sealing 3 and the inner wall 4 of the conduit 1. The sealings may also be provided with inner ribs having inner tops spaced apart in a longitudinal (axial) direction (L) for realizing, in use, annular contact surfaces which are each closed in itself in a circumferential direction between the sealing 3 and the pipe 2. In the Figures, the inner ribs and the inner tops are not shown as these are for the embodiment shown too small in radial direction. However, for further details of the features of a sealing that might be used for the present invention, reference is made WO 2004/111513 A1, particularly Fig. 1 and Fig. 4(a) - 4(e). In that reference, also the outer ribs are more clearly shown. The vulcanized fire-resistant rubber may be a silicone-based rubber. Plugs which are very useful as sealings in embodiments of the present invention, are commercially available form the Applicant, as promoted under the trademark name "SPLIPSIL" plugs. Although not shown in any of the Figures, sealing 3 comprises preferably at least two segmental parts.

An outer diameter of the rubberlike thermally expandable sleeve 5 preferably corresponds to an inner diameter of the conduit 1. This ensures for good thermal contact between the conduit 1 and the sleeve 5. The sleeve may be a multi-part sleeve 5. The sleeve may also comprise layers which are concentrically oriented. It is also possible that the sleeve comprises a wrappable device, for instance a length of sheet which can be wrapped around pipe 2, outside the conduit and then pushed into the conduit 1. The sleeve may comprise ethylvinylacetate (EVA). Examples of a rubberlike thermally expandable sleeve that can be used in embodiments of the present invention can be found in WO 2009/090247 A1.

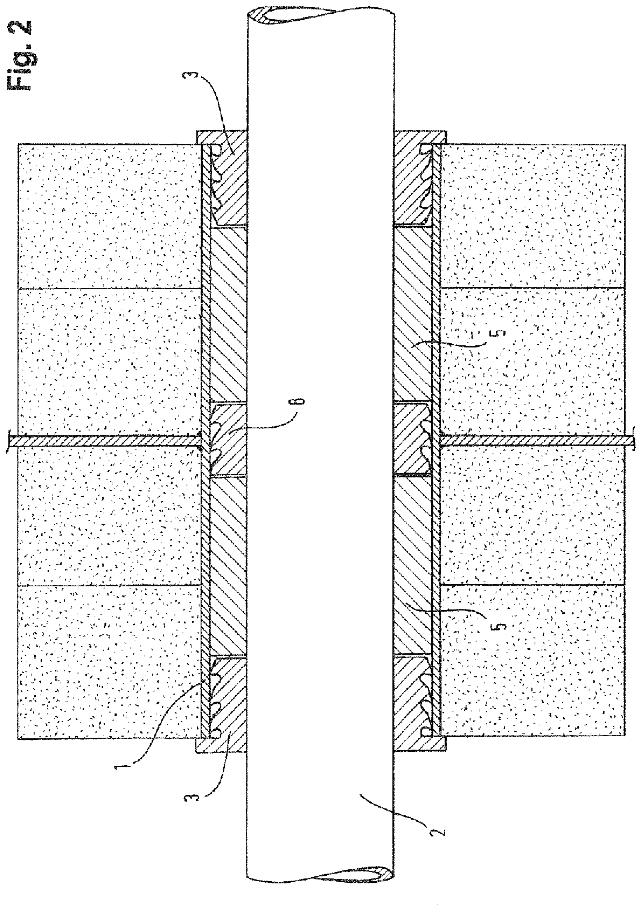

Fig. 2 shows an embodiment of a system according to the invention, further comprising a sealing 8 which is fully insertable into the conduit 1. As shown, that sealing 8 is situated between two rubberlike thermally expandable sleeves 5, for instance in the middle of the conduit 1. Apart from that, all other features as described above for the embodiment shown in Fig. 1 equally apply for the embodiment shown in Fig. 2.

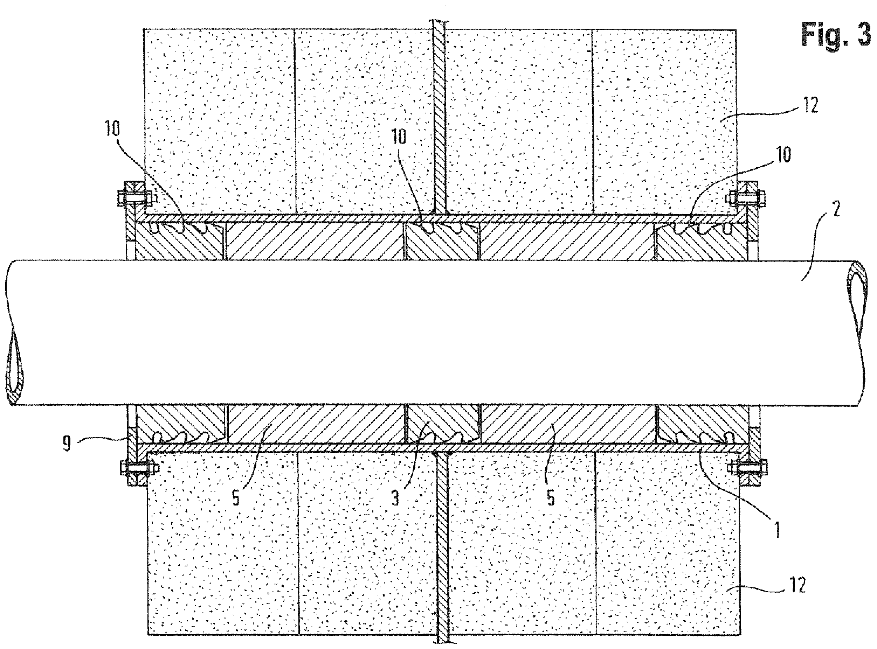

Fig. 3 shows an embodiment of a system according to the invention that is very similar to the embodiment shown in Fig. 2. However, in the embodiment in Fig. 3, each of the sealings 3 are fully insertable into the conduit 1. Conduit 1 is further provided with one retainer 9, as shown at each end of the conduit 1 for hindering movement of the sealings 3 in the axial direction (L) outward conduit 1. Sealings 10 as shown in Fig. 3 are, as said above, each fully insertable into conduit 1. For that purpose, none of the sealings 10 are provided with a flange. For comparison, see Figs. 1 and 2 in which the sealings 3 are shown to have a flange 11.

For a more detailed description of the sealings 8, 10 as shown in Figs. 3 and 4, reference is made to WO 2008/023058 of the present Applicant, particularly Figs. 2-10 of that document. The flangeless plugs are referred to as so-called "DYNATITE" plugs, also commercially available. Such plugs are designed such that the sealing elastically expands in a transverse direction upon axially applied pressure. This results in annular contact surfaces which extend over a larger width, that is in axial direction, as compared with a situation without an axially applied pressure. These annular contact surfaces are present on the inside and the outside. An advantage of using these plugs as sealing plugs in embodiments of the present invention, is thus that on an axial pressure applied by the thermally expandable sleeves the plugs will obtain a firmer grip on the pipe 2. Thus, once the thermally expandable sleeves start expanding, predominantly in the radial direction but inevitably also to some extent in the axial direction, the pipe 2 which has become weak due to the raised temperature is crushed. At a position of this crushing, the diameter of the pipe naturally reduces. Of course, this may also mean that the diameter of the pipe 2 at the position of the sealings 10 also reduces somewhat in diameter. However, such a change in diameter does not lead to a leakage in the sealing as the sealings 10 once pressurized in axial direction start expanding a little in the transverse direction and maintain contact with the outer wall of the pipe 2. It has also turned out that after cooling down the pipe transit from high temperature, the pipes 2 tend to shrink a little. Also this shrinkage does not lead to a leak in the sealing, again due to the transverse expansion of the sealing 3 upon the axially applied pressure by the expanded sleeve 5.

Finally, Fig. 4 shows an embodiment very similar to the embodiment shown in Fig. 1. However, in Fig. 4, none of the sealings are provided with a flange 11, and the conduit is also provided with two retainers 9, in a way similar to the embodiment shown in Fig. 3.

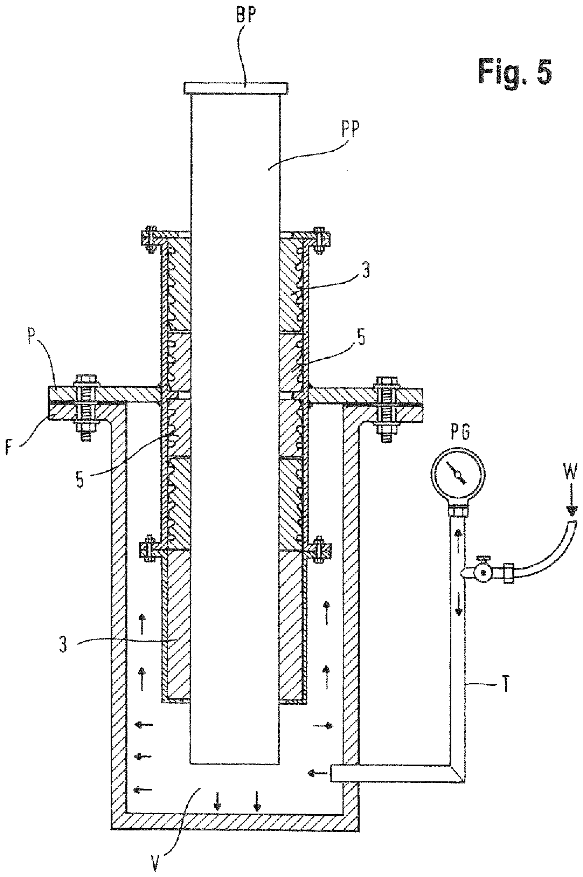

Fig. 5 shows a test unit for testing the watertightness of embodiments of a pipe transit system according to the invention, both before and after exposure to a fire. As shown, a part of the partition T in which the conduit 1 is mounted tightly and sealingly fixed against an upper outward flange F of a vessel V. Water can enter the vessel via a tube T. The water pressure can be measured by a pressure gage PG. Pipe part PP is sealed off by a blind plug BP. With this test set-up it has been shown that the water tightness is maintained for each and every embodiment shown above, when the watertightness as measured before exposure to a fire is compared to the watertightness as measured after exposure to a fire. When pipe P concerned a plastic pipe, i.e. thermally weakenable pipe, the blind plug could be taken off after exposure to a fire. The watertightness was still maintained, at least for 30 minutes up to 1 bar, and for a number of embodiments even up to weeks at a water pressure of 4 bar.

In the embodiment shown in this test set-up, the thermally expandable sleeve 5 is also in the shape of a plug, for instance, in the shape of the sealing 3. For that shape, reference is made to WO 2008/023058, particularly Figs. 2-10. For a possible composition of the materials of which these plugs shown in present Fig. 5 are made, reference is made to EP 1200759 A1.

Each of the Figures 1-4 further show insulation material 12 applied against the outer wall of the conduit and extending by about 200 mm in a radial direction. Insulation should be applied on both sides as one never knows at which side a fire will take place. with the insulation it is possible to control to some extent the transport of heat into the conduit. For instance, if a metal conduit 1 and the metal wall to which the conduit 1 may have been welded are heated up too fast, then the conduit may heat up due to transport of heat from another position other than the position to or from which the plastic pipe extends. It will then be possible that the conduit very quickly heats up and the plastic pipe extending through the conduit not that quickly. Then the thermally expandable sleeve might be triggered to expand too long before the thermally expandable pipe becomes soft. Then the conduit is heated up too slowly. Then the pressure in axial direction may be too high and the plugs, if not secured within the conduit by retaining mechanism 9 may be pushed out of the conduit. Also, the other way around is possible. Then the pipe is heated and weakened before the thermally expandable sleeve starts expanding, or the expansion is dependent on the thermal conductivity properties of the pipe.

A person skilled in the art will by routine experience be able to work out the optimal dimensions for the conduit, the plugs, the length of the thermally expandable sleeve and the amount and dimensions of the insulation.

In that respect also the length of the conduit is a parameter which can be explored and optimized for certain situations. Although the drawings show a conduit length of about 250 mm, also shorter conduits can be used in a system according to the present invention.

The invention is not limited to the embodiments shown in the drawing. Many modifications are possible. The sealings 3 can be such that multiple pipes extend through the conduit 1. Plugs which can be used in such embodiments are shown in WO 2004/111513 A1, Figs. 4(a) - 4(e).

The thermally expandable sleeve may also be relatively short, more somewhat like a thermally expandable collar. Also a multitude of such collars may be used so that, effectively, thermally expandable material of a sleeve configuration is used.

Although not shown, it is possible that the inner wall of conduit 1 is provided with a threshold which marks a borderline between a part of the conduit 1 for holding at least one of the thermally expandable sleeves 5 and a part of the conduit 1 for holding one of the at least two sealings 3, 10. All such modifications are understood to fall within the framework of the invention as defined by the appended claims.

## Claims

1. A pipe transit system for plastic pipes comprising:
(a) a conduit (1) having an axial direction (L) and at least one thermally softenable pipe (2) extending therethrough;
(b) at least two sealings (3), each sealing (3) being sealingly positioned between an inner wall (4) of the conduit (1) and the at least one pipe (2);
(c) at least one rubberlike thermally expandable sleeve (5) surrounding the at least one thermally softenable pipe (2), the at least one rubberlike thermally expandable sleeve (5) in axial direction (L) being situated between the at least two sealings (3),
each of the at least one sleeve (5) and the at least two sealings (3) being an unconnected separate entity even though in axial direction also being adjacent one of the at least two sealings (3) and the at least one sleeve (5),
wherein each of the sealings (3) comprises a vulcanized fire-resistant rubber plug and wherein each of the sealings (3) is provided with outer ribs (6) having outer tops spaced apart in longitudinal direction (L) for realizing, in use, annular contact surfaces (7) which are each closed in itself in a circumferential direction between the sealing (3) and the inner wall (4) of the conduit (1) and each of the sealings is provided with inner ribs having inner tops spaced apart in longitudinal direction (L) for realizing, in use, annular contact surfaces which are each closed in itself in a circumferential direction between the sealing (3) and the at least one pipe, the rubberlike thermally expandable sleeve (5) comprises material having a component which causes the material on exposure to heat to expand rapidly to an extent which is much more than the extent to which that material not having this component would expand.

2. A pipe transit system for plastic pipes according to claim 1, wherein the longest distance between sealings (3), measured between ends furthest apart from each other, corresponds to the sum of the axial lengths of the at least two sealings (3) and the axial lengths of the at least one rubberlike thermally expandable sleeve (5) situated between the at least two sealings (3).

3. A pipe transit system for plastic pipes according to claim 1 or 2, wherein the sum of the axial lengths of the at least two sealings (3) and the axial lengths of the at least one rubberlike thermally expandable sleeve (5) corresponds to the axial length of the conduit (1).

4. A pipe transit system according to any one of the previous claims wherein one of the at least two sealings (3) is fully insertable into the conduit (1).

5. A pipe transit system according to any one of the previous claims wherein the conduit (1) is provided with at least one retainer (9) for hindering movement of one of the at least two sealings (3) in the axial direction outward the conduit (1).

6. A pipe transit system according to claim 4 or 5, wherein at least one of the at least two sealings (3) elastically expands in a transverse direction upon an axially applied pressure.

7. A pipe transit system according to any one of the previous claims wherein the inner wall (4) of the conduit (1) is provided with a threshold which marks a borderline between a part of the conduit (1) for holding at least one of the thermally expandable sleeves and a part of the conduit for holding one of the at least two sealings.

8. A pipe transit system according to any one of the previous claims, wherein the conduit (1) is of a thermally stable material such as a metal or a hard engineering plastic which is not thermally softenable.

9. A pipe transit system according to any one of the previous claims, wherein the system is symmetrical, an imaginary transverse cross-sectional plane of the conduit (1) being the mirror plane.

10. A pipe transit system according to any one of the previous claims, wherein at least one of the at least two sealings (3) is free from metal parts for tightening and controlling the sealing.

11. A pipe transit system according to any one of the previous claims, wherein each sealing (3) comprises at least two segmental parts.

12. A pipe transit system according to any one of the previous claims, wherein an outer diameter of at least one rubberlike thermally expandable sleeve (5) corresponds to an inner diameter of the conduit (1).

13. A pipe transit system according to any one of the previous claims, wherein the sleeve (5) is a multi-part sleeve.

14. A pipe transit system according to any one of the previous claims, wherein the sleeve (5) comprises layers which are concentrically oriented.

15. A pipe transit system according to any one of the previous claims, wherein the sleeve (5) comprises a wrappable device.

## Patentansprüche

1. Rohrtransitsystem für Kunststoffrohre, umfassend:
(a) eine Durchführung (1) mit einer axialen Richtung (L) und mindestens einem sich dort hindurch erstreckenden thermisch erweichbaren Rohr (2);
(b) mindestens zwei Dichtungen (3), wobei jede Dichtung (3) abdichtend zwischen einer Innenwand (4) der Durchführung (1) und dem mindestens einen Rohr (2) angeordnet ist;
(c) mindestens eine gummiartige thermisch ausdehnbare Hülse (5), die das mindestens eine thermische erweichbare Rohr (2) umgibt, wobei die mindestens eine gummiartige thermisch ausdehnbare Hülse (5) sich in axialer Richtung (L) zwischen den mindestens zwei Dichtungen (3) befindet,
wobei jede der mindestens einen Hülse (5) und der mindestens zwei Dichtungen (3) eine nicht verbundene separate Einheit ist, obwohl sie in axialer Richtung auch an einer der mindestens zwei Dichtungen (3) und der mindestens einen Hülse (5) angrenzt,
wobei jede der Dichtungen (3) einen vulkanisierten feuerbeständigen Gummistopfen umfasst und wobei jede der Dichtungen (3) mit äußeren Rippen (6) versehen ist, die in Längsrichtung (L) voneinander beabstandete äußere Oberkanten aufweisen, um, im Gebrauch, ringförmige Kontaktoberflächen (7), die jede in einer Umfangsrichtung in sich selbst geschlossen sind, zwischen der Dichtung (3) und der Innenwand (4) der Durchführung (1) zu verwirklichen, und jede der Dichtungen mit inneren Rippen versehen ist, die in Längsrichtung (L) voneinander beabstandete innere Oberkanten aufweisen, um, im Gebrauch, ringförmige Kontaktoberflächen, die jede in einer Umfangsrichtung in sich selbst geschlossen sind, zwischen der Dichtung (3) und dem mindestens einen Rohr zu verwirklichen, wobei die gummiartige thermisch ausdehnbare Hülse (5) Material umfasst, das eine Komponente aufweist, die das Material veranlasst, sich bei Hitzeeinwirkung rasch in einem Ausmaß auszudehnen, das viel mehr beträgt als das Ausmaß, in dem sich das Material, welches diese Komponente nicht aufweist, ausdehnen würde.

2. Rohrtransitsystem für Kunststoffrohre nach Anspruch 1, wobei der längste Abstand zwischen Dichtungen (3), gemessen zwischen am weitesten voneinander beabstandeten Enden, der Summe der axialen Längen der mindestens zwei Dichtungen (3) und der axialen Längen der mindestens einen, zwischen den mindestens zwei Dichtungen (3) befindlichen gummiartigen thermisch ausdehnbaren Hülse (5) entspricht.

3. Rohrtransitsystem für Kunststoffrohre nach Anspruch 1 oder 2, wobei die Summe der axialen Längen der mindestens zwei Dichtungen (3) und der axialen Längen der mindestens einen gummiartigen thermisch ausdehnbaren Hülse (5) der axialen Länge der Durchführung (1) entspricht.

4. Rohrtransitsystem nach einem der vorhergehenden Ansprüche, wobei eine der mindestens zwei Dichtungen (3) vollständig in die Durchführung (1) einbringbar ist.

5. Rohrtransitsystem nach einem der vorhergehenden Ansprüche, wobei die Durchführung (1) mit mindestens einem Halteelement (9) zur Verhinderung von Bewegung von einer der mindestens zwei Dichtungen (3) in der axialen Richtung auswärts der Durchführung (1) versehen ist.

6. Rohrtransitsystem nach Anspruch 4 oder 5, wobei mindestens eine der mindestens zwei Dichtungen (3) sich bei einem axial angelegten Druck in einer transversalen Richtung ausdehnt.

7. Rohrtransitsystem nach einem der vorhergehenden Ansprüche, wobei die Innenwand (4) der Durchführung (1) mit einer Schwelle versehen ist, die eine Grenzlinie zwischen einem Teil der Durchführung (1) zum Festhalten von mindestens einer der thermisch ausdehnbaren Hülsen und einem Teil der Durchführung zum Festhalten von einer der mindestens zwei Dichtungen markiert.

8. Rohrtransitsystem nach einem der vorhergehenden Ansprüche, wobei die Durchführung (1) aus einem thermisch stabilen Material, wie etwa einem Metall oder einem harten technischen Kunststoff, der nicht thermisch erweichbar ist, besteht.

9. Rohrtransitsystem nach einem der vorhergehenden Ansprüche, wobei das System symmetrisch ist, wobei eine imaginäre transversale Querschnittsebene der Durchführung (1) die Spiegelebene ist.

10. Rohrtransitsystem nach einem der vorhergehenden Ansprüche, wobei mindestens eine der mindestens zwei Dichtungen (3) frei von Metallteilen zum Anspannen und Regeln der Dichtung ist.

11. Rohrtransitsystem nach einem der vorhergehenden Ansprüche, wobei jede Dichtung (3) mindestens zwei segmentförmige Teile umfasst.

12. Rohrtransitsystem nach einem der vorhergehenden Ansprüche, wobei ein Außendurchmesser von mindestens einer gummiartigen thermisch ausdehnbaren Hülse (5) einem Innendurchmesser der Durchführung (1) entspricht.

13. Rohrtransitsystem nach einem der vorhergehenden Ansprüche, wobei die Hülse (5) eine mehrteilige Hülse ist.

14. Rohrtransitsystem nach einem der vorhergehenden Ansprüche, wobei die Hülse (5) Schichten umfasst, die konzentrisch ausgerichtet sind.

15. Rohrtransitsystem nach einem der vorhergehenden Ansprüche, wobei die Hülse (5) eine wickelbare Vorrichtung umfasst.

## Revendications

1. Système de transport de tuyaux pour tuyaux en plastique, comprenant :
(a) un conduit (1) ayant une direction axiale (L) et au moins un tuyau pouvant être thermiquement ramolli (2) s'étendant à travers ce dernier ;
(b) au moins deux joints d'étanchéité (3), chaque joint d'étanchéité (3) étant positionné, de manière étanche, entre une paroi interne (4) du conduit (1) et le au moins un tuyau (2) ;
(c) au moins un manchon thermiquement expansible (5) de type caoutchouc entourant le au moins un tuyau pouvant être thermiquement ramolli (2), le au moins un manchon thermiquement expansible (5) de type caoutchouc, dans la direction axiale (L), étant situé entre les au moins deux joints d'étanchéité (3),
chacun parmi le au moins un manchon (5) et les au moins deux joints d'étanchéité (3) étant une entité séparée non raccordée même si dans la direction axiale, il est adjacent à l'un parmi les au moins deux joints d'étanchéité (3) et le au moins un manchon (5),
dans lequel chacun des joints d'étanchéité (3) comprend un bouchon en caoutchouc vulcanisé résistant au feu et dans lequel chacun des joints d'étanchéité (3) est prévu avec des nervures externes (6) ayant des parties supérieures externes espacées dans la direction longitudinale (L) pour réaliser, à l'usage, des surfaces de contact annulaires (7) qui sont chacune fermées sur elles-mêmes dans une direction circonférentielle entre le joint d'étanchéité (3) et la paroi interne (4) du conduit (1) et chacun des joints d'étanchéité est prévu avec des nervures internes ayant des parties supérieures internes espacées dans la direction longitudinale (L) pour réaliser, à l'usage, des surfaces de contact annulaires qui sont chacune fermées sur elles-mêmes, dans une direction circonférentielle entre le joint d'étanchéité (3) et le au moins un tuyau, le manchon thermiquement expansible (5) de type caoutchouc ayant un composant qui amène le matériau, suite à l'exposition à la chaleur, à subir une expansion rapidement sur une étendue qui est nettement supérieure à l'étendue à laquelle ce matériau n'ayant pas ce composant, subit l'expansion.

2. Système de transport de tuyaux pour tuyaux en plastique selon la revendication 1, dans lequel la plus longue distance entre les joints d'étanchéité (3), mesurée entre les extrémités les plus éloignées l'une de l'autre, correspond à la somme des longueurs axiales des au moins deux joints d'étanchéité (3) et des longueurs axiales du au moins un manchon thermiquement expansible (5) de type caoutchouc situé entre les au moins deux joints d'étanchéité (3).

3. Système de transport de tuyaux pour tuyaux en plastique selon la revendication 1 ou 2, dans lequel la somme des longueurs axiales des au moins deux joints d'étanchéité (3) et des longueurs axiales du au moins un manchon thermiquement expansible (5) de type caoutchouc correspond à la longueur axiale du conduit (1).

4. Système de transport de tuyaux selon l'une quelconque des revendications précédentes, dans lequel l'un des au moins deux joints d'étanchéité (3) peut être complètement inséré dans le conduit (1).

5. Système de transport de tuyaux selon l'une quelconque des revendications précédentes, dans lequel le conduit (1) est prévu avec au moins un dispositif de retenue (9) pour gêner le mouvement de l'un des au moins deux joints d'étanchéité (3) dans la direction axiale vers l'extérieur du conduit (1).

6. Système de transport de tuyaux selon la revendication 4 ou 5, dans lequel au moins l'un des au moins deux joints d'étanchéité (3) subit une expansion élastique dans une direction transversale suite à une pression appliquée de manière axiale.

7. Système de transport de tuyaux selon l'une quelconque des revendications précédentes, dans lequel la paroi interne (4) du conduit (1) est prévue avec un seuil qui marque une ligne de limite entre une partie du conduit (1) pour maintenir au moins l'un des manchons thermiquement expansibles et une partie du conduit pour maintenir l'un des au moins deux joints d'étanchéité.

8. Système de transport de tuyaux selon l'une quelconque des revendications précédentes, dans lequel le conduit (1) est réalisé avec un matériau thermiquement stable tel qu'un métal ou un plastique dur industriel qui ne peut pas être thermiquement ramolli.

9. Système de transport de tuyaux selon l'une quelconque des revendications précédentes, dans lequel le système est symétrique, un plan transversal imaginaire du conduit (1) étant le plan en miroir.

10. Système de transport de tuyaux selon l'une quelconque des revendications précédentes, dans lequel au moins l'un des au moins deux joints d'étanchéité (3) est dépourvu de parties métalliques pour serrer et contrôler l'étanchéité.

11. Système de transport de tuyaux selon l'une quelconque des revendications précédentes, dans lequel chaque joint d'étanchéité (3) comprend au moins deux parties de segment.

12. Système de transport de tuyaux selon l'une quelconque des revendications précédentes, dans lequel un diamètre externe d'au moins un manchon thermiquement expansible (5) de type caoutchouc correspond à un diamètre interne du conduit (1).

13. Système de transport de tuyaux selon l'une quelconque des revendications précédentes, dans lequel le manchon (5) est un manchon à plusieurs pièces.

14. Système de transport de tuyaux selon l'une quelconque des revendications précédentes, dans lequel le manchon (5) comprend des couches qui sont orientées de manière concentrique.

15. Système de transport de tuyaux selon l'une quelconque des revendications précédentes, dans lequel le manchon (5) comprend un dispositif pouvant être enroulé.
